# EUROPEAN PATENT SPECIFICATION

(11) **EP 0 658 410 B1**
(45) Date of publication and mention of the grant of the patent: **20.06.2001**
(21) Application number: 94119963.0
(22) Date of filing: 16.12.1994
(51) Int. Cl.: B29C 44/16, B29C 44/42, B29C 43/18, B32B 5/18

(54) **Multilayer molded article and process for producing it**
Geformter Mehrschichtgegenstand und Verfahren zur seiner Herstellung
Objet moulé multicouche et procédé pour le fabriquer

(30) Priority: 17.12.1993 JP 31828793
(43) Date of publication of application: 21.06.1995
(73) Proprietor: SUMITOMO CHEMICAL COMPANY LIMITED, Osaka-shi, Osaka 541-0041 (JP)
(72) Inventor: Matsumoto, Masahito, Osaka (JP); Mitsui, Kiyoshi, Osaka (JP); Usui, Nobuhiro, Osaka (JP); Terashima, Seiji, Osaka (JP)
(74) Representative: VOSSIUS & PARTNER

(56) References cited:
- EP-A- 0 480 456
- EP-A- 0 544 501
- DE-A- 2 803 206
- GB-A- 1 201 040
- US-A- 4 351 911
- US-A- 5 263 389
- DATABASE WPI Week 7721 Derwent Publications Ltd., London, GB; AN 77-37313y & JP-A-52 047 864 (JAPAN SYNTHETIC RUBBER) , 16 April 1977
- DATABASE WPI Week 9404 Derwent Publications Ltd., London, GB; AN 94-031398 & JP-A-05 338 049 (SHOWA DENKO KK) , 21 December 1993
- DATABASE WPI Week 7439 Derwent Publications Ltd., London, GB; AN 74-68493v & JP-A-49 016 737 (TOA NENRYO KOGYO KK) , 14 February 1974
- DATABASE WPI Week 8224 Derwent Publications Ltd., London, GB; AN 82-49155e & JP-A-57 074 126 (KOBUNSHI GIKEN KK) , 27 October 1980
- EDITORS OF MODERN PLASTICS ENCYCLOPEDIA: "GUIDE TO PLASTICS", 1991, MCGRAW-HILL, INC., NEW YORK

## Description

This invention relates to a process for producing a multilayer molded article comprising a foamed thermoplastic resin and laminated thereon a skin material and to the thus-produced multilayer molded article, which can be used for automobile interior parts and home electric products.

Multilayer molded articles laminated with a skin material on their surface are widely used in various fields, for example, as automobile interior parts and home electric products in view of their good shaping property and low production costs.

To meet the strong demand for lightning of these multilayer molded articles, there has recently been proposed that a skin material is laminated on the surface of a foamed resin base.

JP-A-No.4-148907 discloses a process for producing such multilayer molded articles, comprising the steps of:
placing a skin material between an unclosed pair of female and male molds;
supplying a molten thermoplastic resin composition kneaded with a foaming agent between said skin material and one of the female and male molds;
closing the said pair of molds;
opening them and foaming a molten resin composition under reduced pressure; and
cooling to solidify it.

By this process, light multilayer molded articles with good appearance can be produced in a high molding cycle and low cost. However, it has a problem that deformation of the molded article occurs depending upon the shapes of the multilayer molded articles, particularly bending angles at bended parts of products become outwardly wider than the designed value. This problems can effectively be prevented by, for example, increasing the thickness of the resin bases or sufficiently cooling the multilayer molded articles under adequate pressure in the molds, but these methods cause another problem that the weight of the articles increases, and a molding cycle becomes long or that softness of the skin materials is damaged.

EP-A- 0 544 501 discloses a process for preparing composite foamed molded articles.

It is an object of the present invention to provide a process which, without causing undesired deformation of molded articles, enables the production of a light weight multilayer molded article at a high molding cycle and low cost.

This object was achieved on the basis of the finding that the above mentioned purpose can be attained when a glass fiber containing thermoplastic resin composition with a bending modulus of elasticity of 20,000 kg/cm² or more at room temperature and containing 3-40 % by weight of glass fiber is used.

Thus, the present invention provides a process according to claim 1 for producing a multilayer molded article wherein a skin material is laminated on a surface of a foamed thermoplastic resin base, which comprises the steps of
placing a skin material between an unclosed pair of female and male molds;
supplying a molten resin composition comprising a foaming agent and a glass fiber containing thermoplastic resin having a bending modulus of elasticity of 20,000 kg/cm² or more at room temperature and containing 3 - 40 % by weight of glass fiber between the said skin material and one of female or male molds;
closing both the molds to fill the cavity formed by female and male molds with the molten resin composition;
opening both the molds to foam the molten resin composition under reduced pressure; and
cooling to solidify it.

The present invention is illustrated in detail as follows.

It is necessary that, in order to decrease the deformation of the molded article, the content of the glass fiber in the thermoplastic resin is 3 - 40 % by weight and the bending modulus of elasticity (measurement according to JIS K6758) at room temperature of the glass fiber-containing thermoplastic resin is 20,000 kg/cm² or more. The bending modulus of elasticity of the thermoplastic resin is brought to the above-mentioned values by the adjustment of the amount of glass fiber to be blended.

The kind of thermoplastic resins is not particularly limited as far as they satisfy these conditions. Polypropylene resin, polyethylene resin, polyvinylchloride resin, polystyrene resin, poly methylmethacrylate resin, polycarbonate resin, polyamide resin such as nylon, and acrylonitrile - butadiene - styrene block copolymer, which have been used for injection molding, press molding, extruding molding and the like, can be used. Among these, polypropylene resin is preferably used in the present invention.

In these thermoplastic resins, various conventional additives such as a coloring agent and a filler such as talc and calcium carbonate, and a weatherability agent may be blended.

As the above mentioned polypropylene resin, propylene homopolymer, various copolymers containing propylene as the main component such as ethylene - propylene copolymer are used, and among these polypropylene resins, the one with a melt flow index (MI) of 15 - 300 g/10min is preferred. The melt flow index mentioned herein is a value measured according to JIS K7210 (230 °C, 2.16 kg).

The glass fiber to be blended with the above mentioned thermoplastic resin is not restricted in its kind and shape, but those with the average fiber length in the multilayer molded article in a range 0.5 - 15 mm, particularly glass fiber with average fiber length of 1 mm or more is preferred, and it is preferred that fiber diameter is within the range 3 - 20 *µ*m.

The method for mixing the thermoplastic resin and glass fiber is not particularly restricted. For example, the thermoplastic resin powder or pellets are mixed with glass fibers of a prescribed length, preferably 5 - 25mm, or so-called long fiber-reinforced thermoplastic resin pellets, which can be obtained by cutting a thermoplastic resin-covered bunch of glass fiber to an adequate length, preferably 5 - 25mm, are used. In order to keep average fiber length of 1 mm or more in the resin article, attention is to be paid not to cut the glass fibers excessively during kneading the thermoplastic resin.

The said average fiber length can be determined as follows:
After the combustion of base resin of the multilayer molded article, residual glass fibers which remain as ash are randomly collected and the sum of sampled glass fiber length is divided by the number of the sampled glass fiber. The number of the sampled glass fiber is usually about 200 or more.

The foaming agent used in the present invention is not particularly restricted, but those conventionally used in the production of foamed thermoplastic resin articles can be used. For example, inorganic foaming agents such as sodium bicarbonate and organic foaming agents such as azodicarbonamide are exemplified. The amount of said foaming agent is the same as in the conventional usages and not particularly restricted. It is usually 0.5 - 5 % by weight of the glass fiber-containing thermoplastic resin.

As the skin material of the present invention, e.g. a woven fabric, knitting fabric, non-woven fabric, sheet or film of thermoplastic resin or thermoplastic elastomer is used, and these may have uneven patterns such as a grain on the surface. Furthermore various foamed sheets, for example, foamed article of thermoplastic resin such as polyolefin resin, polyvinylchloride resin and polystyrene resin, the foamed article of thermosetting resin such as polyurethane, foamed rubber of cis-1,4-polybutadiene, ethylene - propylene copolymer and so on can be used.

These skin materials may be used alone or as multilayered skin materials wherein two or more of said materials are laminated with an adhesive, for example, a woven fabric, non-woven fabric, sheet or film of thermoplastic resin or thermoplastic elastomer is laminated on a foamed sheet.

When these skin materials are used in the present invention, pre-heating and pre-shaping may be performed in advance in order to adjust tensile stress and the elongation of the skin materials.

### Brief illustration of drawings:

Figure 1 is a rough sketch of the cross section of the mold apparatus of the process of the present invention, wherein the skin material is placed between open molds.

Figure 2 is a rough sketch of the cross section of the mold apparatus of the process of the present invention, wherein the molten resin composition is fed between the skin material and the female mold.

Figure 3 is a rough sketch of the cross section of the mold apparatus of the process of the present invention, wherein the resin is foamed by opening slightly the molds after closing.

Figure 4 is the cross section of the central part of the multilayer molded article obtained by the process of the present invention.

Figure 5 shows a deformed state at the end of bended part of the multilayer molded article.

The signs used in these figures denote the followings:

| | | | |
|---|---|---|---|
| (1) | female mold | (2) | male mold |
| (3) | clamper | (4) | resin-feeding opening |
| (5) | resin-feeding pass | (6) | skin material |
| (7) | cooling pipe | (11) | molten resin composition |
| (12) | foamed resin composition | (20) | multilayer molded article |
| θ | deformation angle | | |

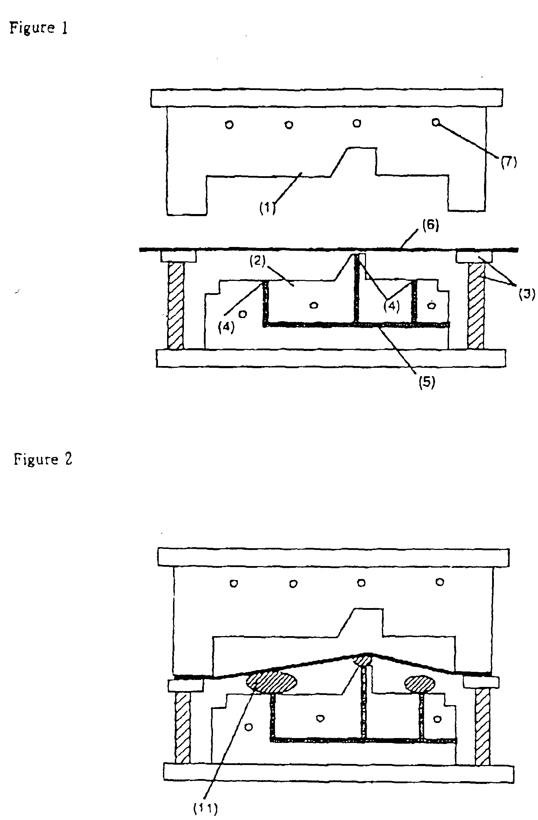

A molding apparatus used in the present invention comprises a pair of female (1) and male (2) molds as exemplified in figures 1 - 3.

Clampers (3) which can freely expand and contract by e.g. oil pressure, air pressure or a spring in such a direction that permits the clamping of the molds to fix skin materials are equipped adjacent to the outer part of the male mold (2). These clampers (3) are properly adjusted to correspond to the complexity of a product shape. For this purpose, a certain means such as pins for controlling the expansion of a skin material (6) at clamping may be set on the clampers. The skin material may be clipped between the clamper (3) and a parting plane of the female mold (1) and the expansion of the skin material may be controlled by adjusting power on the clamper.

In the male mold (2), a resin-feeding pass (5) for providing molten resin and arbitrary numbers of resin-feeding openings (4), through which molten resin is provided in the cavity, are equipped. Naturally, the said resin-feeding pass (5) and resin-feeding openings (4) may be equipped on the female mold (1) when the mold design requires. Cooling pipe (7) for cooling molds may be equipped on both or one of male mold (2) and female mold (1) according to its necessity.

By using the said apparatus, a specific method for carrying out the method of the present invention is illustrated. Following illustration is an example of the present invention and the present invention is not restricted only to this.

The skin material (6) is fixed by the clamper (3) and placed between unclosed female (1) and male (2) molds (Figure 1). Next, after the female mold (1) is lowered to an appropriate position, a molten resin composition (11) obtained beforehand by melt kneading of a thermoplastic resin, glass fiber and a foaming agent by an injection machine (not shown in figure) is provided between the skin material (6) and male mold (2) through the resin-feeding pass (5) and the resin-feeding opening (4) (Figure 2). At this time the molten resin composition may be fed after the female mold (1) has been lowered or during the female mold (1) is being lowered, but in the latter case, the feeding of the molten resin composition must be finished at the same time or before the finish of clamping of the molds.

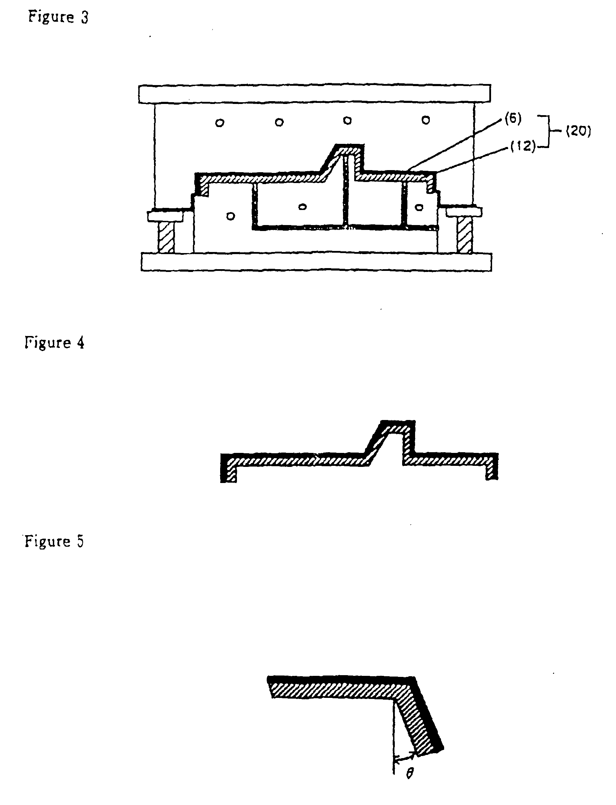

In the case that feeding of the molten resin has finished before completion of closing the molds, the female mold (1) is taken down further after the molten resin is fed, and the molten resin composition fed is spread in the mold and filled in the cavity formed by the pair of female and male molds. By this time the foaming agent in the molten resin composition has already decomposed and the gas generated is contained in the resin. Then, the female mold (1) is opened a little, and by reducing pressure, the unsolidified molten resin composition is foamed, and the thus foamed molten resin composition (12) is cooled and solidified as it stands (Figure 3). After that, the molds are opened to take out the molded article. Thus, the multilayer molded article (20) wherein the skin material is laminated on the surface of the foamed thermoplastic resin can be obtained. Further, the extent of the foaming of the molten resin can be adjusted freely by adjusting the extent of the opening of the female mold (1). The female mold (1) is again lowered a little before the molded article is taken out and the solidified or unsolidified foamed thermoplastic resin composition (12) may be pressed again.

By the process of the present invention a multilayer molded article comprising a skin material laminated integratedly on the surface of a glass-fiber containing foamed thermoplastic resin base, which is light and hardly deforms, can be Obtained, which is particularly suitable for interior parts of an automobile, for example, an instrument panel, a door trim, a seat back, a partition board and a console box.

### (Examples)

The present invention is illustrated by examples as follows, but it is needless to say that the present invention is not restricted to them.

### Example 1

A laminated sheet comprising a foamed polypropylene sheet (thickness of 3 mm, an expansion rate of 15 ) laminated as a lining material on a polypropylene elastomer sheet with a thickness of 0.5 mm was placed on a clamper (Figure 1), and was clamped between a parting plane of a female mold by bringing down the female mold. While a skin material being slipped into a cavity, the female mold was further slowly taken down and, when the cavity clearance reached 20 mm, a molten polypropylene resin composition (melt temperature : 200°C) was fed between the surface of a male mold and the skin material from a resin-feeding opening as shown in figure 2.

The molten polypropylene resin composition used here was obtained by melt kneading of 95 parts by weight of a glass fiber-containing polypropylene resin composition comprising a mixture of glass fiber and Sumitomo Norblene® AX568 (polypropylene resin manufactured by Sumitomo Chemical Co., Ltd., MI:65), the content of glass fiber being 15 % by weight and average glass fiber length being 2 mm, and the bending modulus of elasticity of the mixture being 31,000 kg/cm², and 5 parts by weight of an polyethylenic foaming agent masterbatch (MB1023 manufactured by Sankyo Chemical Co., Ltd.) which contains 30 % by weight of foaming agent.

After supplying the molten polypropylene resin composition, the female mole was further taken down to close the molds, and then raised a little to open the molds. The molds were cooled at this state so that the resin composition was solidified (Figure 3), then the molds were opened, and the molded article was taken out. During this molding process the female mold was adjusted to 30°C and the male mold to 70 °C before cooling.

Thus, an interior part of an automobile comprising a skin material laminated on the surface of a foamed resin with a thickness of 2.5 mm and an expansion rate by foaming of 1.4 times, which had the dimension with length of 900 mm, a width of 750 mm, a bending angle at the end of 90 degrees, and a height at the end of bended part of 10 mm, and of which cross section of central part is shown in figure 4, was obtained. After the product was allowed to stand in a room for a day, the bended part was slightly opened outward, the bending angle was 93 degrees and the deformation angle (θ) was 3 degrees.

### Example 2

In the same manner as in Example 1 but using the glass fiber-containing polypropylene resin composition with average glass fiber length of 1.3 mm, glass fiber content of 7 % by weight and the bending modulus of elasticity of 22,000 kg/cm² at 23°C, a similar interior part of an automobile was obtained.

After the interior part of an automobile obtained was allowed to stand in a room for a day, the bending angle was 95 degrees and the deformation angle (θ) was 5 degrees.

### Example 3

In the same manner as in Example 1 but using the glass fiber-containing polypropylene resin composition with average glass fiber length of 0.6 mm, glass fiber content of 15 % by weight and the bending modulus of elasticity of 29,000 kg/cm² at 23 °C, a similar interior part of an automobile was obtained.
After the interior part of an automobile obtained was allowed to stand in a room for a day, the bending angle was 98 degrees and the deformation angle (θ) was 8 degrees.

### Comparative example 1

In the same manner as in Example 1 except that no glass fiber was blended and Sumitomo Norblene® BPZ5077 (polypropylene resin manufactured by Sumitomo Chemical Co., Ltd., MI: 40, a bending modulus of elasticity: 22,000 kg/cm²) was used as a resin component, a similar interior part of an automobile was obtained.

After the interior part of an automobile obtained was allowed to stand in a room for a day, the bending angle was 103 degrees and the deformation angle (θ) was 13 degrees.

### Comparative example 2

In the same manner as in Example 1 except that Sumitomo Norblene AX574 (manufactured by Sumitomo Chemical Co., Ltd., MI: 45) as a polypropylene resin was used and the glass fiber-containing polypropylene resin composition with a bending modulus of elasticity of 19,000 kg/cm² at 23 °C, containing glass fiber with average glass fiber length of 1.5 mm in an amount of 4 % by weight was used, a similar interior part of an automobile was obtained.

After the interior part of an automobile obtained was allowed to stand in a room for a day, the bending angle was 115 degrees and the deformation angle (θ) was 15 degrees.

## Claims

1. A process for producing a multilayer molded article wherein a skin material is laminated on a surface of a foamed thermoplastic resin base, which process comprises steps of:
placing a skin material between an unclosed pair of female and male molds;
supplying a molten resin composition comprising a foaming agent and a glass fiber containing thermoplastic resin having a bending modulus of elasticity of 20,000 kg/cm² or more at room temperature and containing 3 - 40 % by weight of glass fiber between the said skin material and one of the female and male molds;
closing said pair of molds to fill the cavity formed by said molds with said molten resin composition;
opening both the molds to foam the molten resin composition under reduced pressure; and
cooling to solidify it.

2. A process for producing the multilayer molded article of claim 1 wherein the average fiber length of the glass fiber is 1 mm or more.

3. A process for producing the multilayer molded article of claim 1 or 2 wherein the themoplastic resin is a polypropylene resin.

4. A process for producing the multilayer molded article described in claim 3 wherein the melt flow index at 230°C of the polypropylene resin is within a range of 15 - 300 g/10 min.

5. A process for producing the multilayer molded article of claim 1, wherein the average fiber length of the glass fiber is within a range of 0.5 - 15 mm.

6. A process for producing the multilayer molded article of claim 1, wherein the fiber diameter of the glass fiber is within a range of 3 - 20 µm.

## Patentansprüche

1. Verfahren zum Herstellen eines mehrschichtigen Formteils, in dem ein Oberflächenmaterial auf die Oberfläche einer geschäumten, thermoplastischen Harzbasis laminiert wird, wobei das Verfahren die Schritte umfasst:
Plazieren eines Oberflächenmaterials zwischen ein offenes Paar von Stempel- und Gesenkformen;
Zuführen einer geschmolzenen Harzmasse, umfassend ein Treibmittel und ein Glasfasern enthaltendes, thermoplastisches Harz mit einem Biegeelastizitätsmodul bei Zimmertemperatur von 20.000 kg/cm² oder mehr, das 3 bis 40 Gew.-% Glasfasern enthält, zwischen das Oberflächenmaterial und eine der Stempel- und Gesenkformen;
Schließen des Formenpaars, wodurch der durch die Formen erzeugte Hohlraum mit der geschmolzenen Harzmasse gefüllt wird;
Öffnen beider Formen, wodurch die geschmolzene Harzmasse unter vermindertem Druck geschäumt wird und
Abkühlen zur Verfestigung.

2. Verfahren zum Herstellen des mehrschichtigen Formteils nach Anspruch 1, wobei die mittlere Faserlänge der Glasfasern 1 mm oder mehr beträgt.

3. Verfahren zum Herstellen des mehrschichtigen Formteils nach Anspruch 1 oder 2, wobei das thermoplastische Harz ein Polypropylenharz ist.

4. Verfahren zum Herstellen des in Anspruch 3 beschriebenen, mehrschichtigen Formteils, wobei der Schmelzindex bei 230°C des Polypropylenharzes im Bereich von 15 bis 300 g/10 min liegt.

5. Verfahren zum Herstellen des mehrschichtigen Formteils nach Anspruch 1, wobei die mittlere Faserlänge der Glasfasern im Bereich von 0,5 bis 15 mm liegt.

6. Verfahren zum Herstellen des mehrschichtigen Formteils nach Anspruch 1, wobei der Faserdurchmesser der Glasfasern im Bereich von 3 bis 20 µm liegt.

## Revendications

1. Procédé de fabrication d'un article moulé multicouche dans lequel un matériau de croûte est stratifié sur la surface d'une base de mousse de résine thermoplastique, le procédé comprenant les étapes consistant à :
placer un matériau de croûte entre une paire non fermée de moules femelle et mâle ;
fournir une composition de résine fondue comprenant un agent moussant et une résine thermoplastique contenant des fibres de verre ayant un module d'élasticité en flexion de 20 000 kg/cm² ou plus à température ambiante et contenant 3 à 40% en poids de fibres de verre, entre ledit matériau de croûte et un des moules femelle et mâle ;
fermer ladite paire de moules pour remplir la cavité formée par lesdits moules avec ladite composition de résine fondue ;
ouvrir les deux moules pour faire mousser la composition de résine fondue sous pression réduite ; et
refroidir pour la solidifier.

2. Procédé de fabrication d'un article moulé multicouche selon la revendication 1, caractérisé en ce que la longueur de fibre moyenne des fibres de verre est 1 mm ou plus.

3. Procédé de fabrication d'un article moulé multicouche selon la revendication 1 ou 2, caractérisé en ce que la résine thermoplastique est une résine de polypropylène.

4. Procédé de fabrication d'un article moulé multicouche décrit dans la revendication 3, caractérisé en ce que l'indice d'écoulement à l'état fondu à 230°C de la résine de polypropylène est dans une plage de 15 à 300 g/10 min.

5. Procédé de fabrication d'un article moulé multicouche selon la revendication 1, caractérisé en ce que la longueur de fibre moyenne des fibres de verre est dans une plage de 0,5 à 15 mm.

6. Procédé de fabrication d'un article moulé multicouche selon la revendication 1, caractérisé en ce que le diamètre de fibre des fibres de verre est dans une plage de 3 à 20 µm.
